# EUROPÄISCHE PATENTSCHRIFT

(11) **EP 4 202 289 B1**
(45) Veröffentlichungstag und Bekanntmachung des Hinweises auf die Patenterteilung: **21.08.2024**
(21) Anmeldenummer: 21217502.0
(22) Anmeldetag: 23.12.2021
(51) Int. Cl.: F21S 41/147, F21S 41/27, F21S 41/32, F21S 41/36, F21S 41/365, F21S 41/43, F21S 41/663, F21S 41/25, F21S 41/265, B60Q 1/00

(54) **OPTIKSYSTEM FÜR EINEN KRAFTFAHRZEUGSCHEINWERFER**
LENS SYSTEM FOR A MOTOR VEHICLE HEADAMP
SYSTÈME OPTIQUE POUR UN PHARE DE VÉHICULE AUTOMOBILE

(43) Veröffentlichungstag der Anmeldung: 28.06.2023
(73) Patentinhaber: ZKW Group GmbH, 3250 Wieselburg (AT)
(72) Erfinder: Schager, Alexander, 3270 Scheibbs (AT); Edletzberger, Thomas, 3382 Schollach (AT); Kern, Thomas, 3310 Neidling (AT); Fahrngruber, Manuel, 3281 Oberndorf an der Melk (AT); Mader, Daniel, 3371 Neumarkt an der Ybbs (AT); Wachsenegger, Jürgen, 3281 Oberndorf an der Melk (AT); Wippel, Patrick, 3254 Bergland (AT)
(74) Vertreter: Patentanwaltskanzlei Matschnig & Forsthuber OG

(56) Entgegenhaltungen:
- EP-A1- 3 249 284
- EP-A1- 3 653 926
- WO-A1-2020/235609
- WO-A1-2021/038855
- DE-A1- 102008 051 109
- DE-T5- 112017 000 365
- JP-A- 2008 277 130

## Beschreibung

Die Erfindung betrifft ein Optiksystem für einen Kraftfahrzeugscheinwerfer, wobei das Optiksystem die Merkmale des Oberbegriffes von Anspruch 1 beinhaltet.

Aus dem Stand der Technik sind gattungsgemäße Optiksysteme bekannt. Üblicherweise erfüllen Lichtverteilungen, welche mit dem Optiksystem erzeugt werden können, bestimmte gesetzliche Vorschriften. Sollen nun zusätzliche Anforderungen, welche über die Gesetzesvorgaben hinaus gehen, erfüllt werden, werden üblicherweise zusätzliche Beleuchtungsvorrichtungen bereitgestellt, welche die zusätzliche Anforderung erfüllen. Dies ist jedoch mit hohen Kosten verbunden.

Beleuchtungssysteme für Kraftfahrzeuge gemäß dem Stand der Technik sind beispielsweise in den Dokumenten WO 2021/038855 A1, DE 11 2017 000365 T5, EP 3 653 926 A1, WO 2020/235609 A1, EP 3 249 284 A1, DE 10 2008 051109 A1 oder JP 2008 277130 A gezeigt.

Die Aufgabe der vorliegenden Erfindung besteht darin, die Nachteile des Standes der Technik zu lindern bzw. zu beseitigen. Die Erfindung setzt sich daher insbesondere zum Ziel, ein Optiksystem zu schaffen, mit welchem die Erzeugung einer Lichtverteilung verbessert wird.

Diese Aufgabe wird durch ein Optiksystem mit den kennzeichnenden Merkmalen von Anspruch 1 gelöst.

Bevorzugte Ausführungen sind in den abhängigen Ansprüchen angegeben.

Erfindungsgemäß sind die erste Vorsatzoptik und der erste Optikkörper derart ausgestaltet und dazu eingerichtet, ein erstes Lichtbündel abzustrahlen, welches eine erste Fernfeld-Lichtverteilung ausbildet, wobei die erste Fernfeld-Lichtverteilung eine zumindest abschnittsweise gerade Hell-Dunkel-Grenze aufweist, welche zumindest teilweise, vorzugsweise vollständig, unterhalb der HH-Linie liegt,
wobei die zweite Vorsatzoptik und der zweite Optikkörper derart ausgestaltet und dazu eingerichtet sind, ein zweites Lichtbündel abzustrahlen, welches eine zweite Fernfeld-Lichtverteilung ausbildet, wobei die zweite Fernfeld-Lichtverteilung unterhalb der Hell-Dunkel-Grenze der ersten Fernfeld-Lichtverteilung liegt.

Dadurch ergibt sich der Vorteil, dass eine zusammengesetzte Fernfeld-Lichtverteilung mit ein und demselben Optiksystem erzeugt werden kann. Es kann vorgesehen sein, dass auch mehrere Vorsatzoptiken einem einzigen Optikkörper zu geordnet sein. Diese Vorsatzoptiken können den Lichteinkoppelbereich des Optikkörpers symmetrisch, aber auch asymmetrisch ausleuchten. Die Einkoppelfläche des Optikkörpers ist dazu eingerichtet, das auftreffende Licht auf die optisch wirksame Blendenkante zu fokussieren. Die Brennfläche der Projektionslinse kann als eine Petzval-Fläche verstanden werden, welche eine bestimmte Krümmung aufweist, wobei die Blendenkante der Strahlenblende der Petzval-Fläche der Projektionslinse derart folgt, dass die Blendenkante in der Petzval-Fläche liegt. Dadurch kann eine scharfe Abbildung der mit der Blendenkante erzeugten Hell-Dunkel-Grenze erreicht werden. Die mit dem Optiksystem erzeugbare Gesamt- Fernfeld-Lichtverteilung, welche aus der ersten Fernfeld-Lichtverteilung und der zweiten Fernfeld-Lichtverteilung zusammengesetzt ist, ist insbesondere eine Abblend-Lichtverteilung.

Es kann vorgesehen sein, dass die erste Fernfeld-Lichtverteilung einen ersten Gradienten und die zweite Fernfeld-Lichtverteilung einen zweiten Gradienten aufweist, wobei der erste Gradient entlang eines vertikalen Schnitts durch die Helldunkelgrenze der ersten Fernfeld-Lichtverteilung und der zweite Gradient entlang eines vertikalen Schnitts durch die Helldunkelgrenze der zweiten Fernfeld-Lichtverteilung bestimmt wird, wobei der erste Gradient kleiner ist als der zweite Gradient, wobei vorzugsweise die erste Fernfeld-Lichtverteilung Helligkeitswerte, welche in den Punkten 50V und 50R in einer Abblend-Lichtverteilung vorgegeben werden, erfüllt. Die Quantifizierung eines Hell-Dunkel-Übergangs einer Lichtverteilung erfolgt durch das Maximum eines Gradienten entlang eines vertikalen Schnitts durch die Helldunkelgrenze. Dazu wird der Logarithmus der Beleuchtungsstärke an Messpunkten in 0,1°-Abständen errechnet und deren Differenz gebildet, wodurch man die Gradientenfunktion erhält. Das Maximum dieser Funktion wird als Gradient der HD-Grenze bezeichnet. Da diese Definition die menschliche Helligkeitswahrnehmung nur ungenau nachbildet, können unterschiedlich wahrgenommene HD-Linien denselben gemessenen Gradientenwert aufweisen bzw. bei ähnlich aussehenden HD-Linien können unterschiedliche Gradienten gemessen werden. Einem Fachmann ist die Bedeutung und die Ermittlung des Gradienten einer Hell-Dunkel-Grenze bekannt, nichtsdestotrotz wird in diesem Zusammenhang auf die UN ECE Regulierungsrichtlinie "UN-R 123/02 Suppl. 2, Seiten 67-69", Bezug genommen. Weiters wird Bezug genommen auf "Berichte der Bundesanstalt für Straßenwesen, Fahrzeugtechnik Heft F 65, Entwicklung von Kriterien zur Bewertung der Fahrzeugbeleuchtung im Hinblick auf ein NCAP für aktive Fahrzeugsicherheit, Seite 37".

Es kann vorgesehen sein, dass das erste Lichtbündel, welches die erste Fernfeld-Lichtverteilung ausbildet, mit dem zweiten Lichtbündel, welches die zweite Fernfeld-Lichtverteilung ausbildet, im Fernfeld, welches in einem Abstand von 25 m zum Optiksystem liegt, zumindest teilweise überlappt, wobei vorzugsweise das erste Lichtbündel und das zweite Lichtbündel im Nahfeld, welches in einem Abstand von bis zu 200 mm vor dem Optiksystem liegt, überlappungsfrei sind. Der Punkt 50V liegt bei einem ECE konformen Messschirm bei horizontal 0° und vertikal -0,86°. Der Punkt 50R liegt bei einem ECE konformen Messschirm bei horizontal -1,72° und vertikal -0,86°. Als Nahfeld kann ein Bereich verstanden werden, der näher als die 10-fache Länge der Brennweite der Projektionslinse ist.

Es kann vorgesehen sein, dass der erste Optikkörper und der zweite Optikkörper baugleich sind. Dadurch ergibt sich der Vorteil, dass die Produktionskosten reduziert werden.

Es kann vorgesehen sein, dass der erste Einkoppel-Winkel und der zweite Einkoppel-Winkel unterschiedlich sind. Insbesondere kann der erste Einkoppel-Winkel kleiner sein als der zweite Einkoppel-Winkel.

Es kann vorgesehen sein, dass die optischen Achsen des ersten und zweiten Optikkörpers parallel zueinander orientiert sind.

Es kann vorgesehen sein, dass die erste Vorsatzoptik und die zweite Vorsatzoptik unterschiedlich ausgestaltet sind, wobei insbesondere Lichtauskoppelflächen der ersten und zweiten Vorsatzoptik, über welche das Licht der Lichtquelle in Richtung des jeweiligen Optikkörpers abgestrahlt wird, unterschiedlich groß ausgebildet sind. Dadurch ergibt sich der Vorteil, dass über die Größe der Lichtauskoppelflächen die Lichtmenge, welche in den entsprechenden Optikkörper einkoppelbar ist, variiert werden kann.

Erfindungsgemäß ist vorgesehen, dass die erste Vorsatzoptik zu dem ersten Optikkörper in einem ersten Abstand, welcher als Distanz zwischen einem Mittelpunkt der Lichtauskoppelfläche der ersten Vorsatzoptik und einem Schnittpunkt der optischen Achse des ersten Optikkörpers mit der Blendenkante des ersten Optikkörpers definiert ist, zueinander angeordnet sind und die zweite Vorsatzoptik zu dem zweiten Optikkörper in einem zweiten Abstand, welcher als Distanz zwischen einem Mittelpunkt der Lichtauskoppelfläche der zweiten Vorsatzoptik und einem Schnittpunkt der optischen Achse des zweiten Optikkörpers mit der Blendenkante des zweiten Optikkörpers definiert ist, zueinander angeordnet sind, wobei der erste Abstand kleiner ist als der zweite Abstand. Durch den größeren Abstand der zweiten Vorsatzoptik zu dem zweiten Optikkörper kann das mit dem zweiten Optikkörper und der zweiten Vorsatzoptik abstrahlbare zweite Lichtbündel breiter sein als das erste Lichtbündel. Ferner kann das zweite Lichtbündel eine geringere Beleuchtungsstärke als das erste Lichtbündel aufweisen. Das aus dem ersten Lichtbündel und dem zweiten Lichtbündel gebildete Gesamtlichtbündel (welches eine Gesamt-Fernfeldlichtverteilung ausbilden kann, welche aus der ersten Fernfeldlichtverteilung und zweiten Fernfeldlichtverteilung gebildet sein kann), kann somit breiter und homogener als das erste Lichtbündel sein.

Es kann vorgesehen sein, dass der erste Optikkörper und die erste Vorsatzoptik vertikal über dem zweiten Optikkörper und der zweiten Vorsatzoptik angeordnet sind. Dadurch ergibt sich der Vorteil, dass das Optiksystem besonders kompakt ist.

Es kann vorgesehen sein, dass der erste Optikkörper relativ zu dem zweiten Optikkörper derart angeordnet ist, dass die Projektionslinse des ersten Optikkörpers zu der Projektionslinse des zweiten Optikkörpers entlang einer Richtung, welche parallel zur optischen Achse des ersten Optikkörpers orientiert ist, versetzt zueinander angeordnet ist.

Es kann vorgesehen sein, dass der Lichteinkoppelbereich des ersten Optikkörpers und/oder des zweiten Optikkörpers eine gekrümmte Oberfläche aufweist.

Es kann vorgesehen sein, dass der Lichteinkoppelbereich des ersten Optikkörpers und/oder des zweiten Optikkörpers kugelsegmentförmig ausgebildet ist. Dadurch ergibt sich der Vorteil, dass die Lichteinkopplung in den ersten Optikkörper und/oder in den zweiten Optikkörper besonders effizient erfolgen kann.

Es kann vorgesehen sein, dass das mit dem ersten Optikkörper erzeugbare, die erste Fernfeld-Lichtverteilung ausbildende, erste Lichtbündel einen ersten horizontalen Abstrahl-Winkel und das mit dem zweiten Optikkörper erzeugbare, die zweite Fernfeld-Lichtverteilung ausbildende, zweite Lichtbündel einen zweiten horizontalen Abstrahl-Winkel aufweist, wobei der erste horizontale Abstrahl-Winkel kleiner ist als der zweite horizontale Abstrahl-Winkel. Als horizontaler Abstrahl-Winkel kann die Abstrahlbreite der Fernfeld-Lichtverteilung in einer horizontalen Ebene verstanden werden. Mit anderen Worten kann die zweite Fernfeld-Lichtverteilung breiter sein als die erste Fernfeld-Lichtverteilung. Insbesondere kann die erste Fernfeld-Lichtverteilung die gesetzlichen (Breiten-)Anforderungen erfüllen und die zweite Fernfeld-Lichtverteilung kann einen, im Vergleich zur ersten Fernfeld-Lichtverteilung, breiteren Bereich ausleuchten. Es kann vorgesehen sein, dass der erste Optikkörper eine zentrale Fernfeld-Lichtverteilung erzeugt und der zweite Optikkörper eine de-zentrale Fernfeld-Lichtverteilung erzeugt, wobei die dezentrale Fernfeld-Lichtverteilung an einem linken oder rechten Rand der zentralen Fernfeld-Lichtverteilung angeordnet ist. In einem Ausführungsbeispiel können drei Optikkörper vorgesehen sein, wobei ein zweiter Optikkörper einen Bereich links von der zentralen Fernfeld-Lichtverteilung und ein dritter Optikkörper einen Bereich rechts von der zentralen Fernfeld-Lichtverteilung ausleuchtet. In diesem Ausführungsbeispiel ist eine Gesamt-Fernfeld-Lichtverteilung aus drei Teil-Fernfeld-Lichtverteilungen zusammengesetzt, wobei sich die einzelnen Teil-Lichtverteilungen teilweise überlappen können.

Es kann vorgesehen sein, dass die mit dem ersten bzw. zweiten Optikkörper erzeugbare erste bzw. zweite Fernfeld-Lichtverteilung jeweils ein Helligkeitsmaximum aufweist, wobei die optische Achse des zweiten Optikkörpers zu der optischen Achse des ersten Optikkörpers unter einem Neigungswinkel, welcher größer als 0° ist, geneigt ist, wobei der Neigungswinkel derart ist, dass das Helligkeitsmaximum bzw. der Helligkeitsmaximumsbereich der zweiten Fernfeld-Lichtverteilung innerhalb des Helligkeitsmaximums bzw. des Helligkeitsmaximumsbereichs der ersten Fernfeld-Lichtverteilung liegt. Mit anderen Worten kann der ersten Optikkörper zu dem zweiten Optikkörper geneigt sein, wobei der Neigungswinkel vorzugsweise größer 0° ist.

Es kann vorgesehen sein, dass der Neigungswinkel 0,1° bis 0,5°, insbesondere 0,3°, beträgt. Der Neigungswinkel ist vorzugsweise zwischen 0,1° und 5°, insbesondere zwischen 0,1° und 3°, besonders bevorzugt zwischen 0,1° und 1°.

Es kann vorgesehen sein, dass zwischen dem ersten und dem zweiten Optikkörper ein Abschattungselement angeordnet ist, welches dazu eingerichtet ist, Streulicht, welches von der ersten Vorsatzoptik in Richtung des zweiten Optikkörpers abgestrahlt wird, zu blockieren. Das Abschattungselement kann eine Blende sein.

Es kann vorgesehen sein, dass der Lichteinkoppelbereich des ersten Optikkörpers durch, vorzugsweise vier, Seitenkanten begrenzt ist, wobei die in vertikaler Richtung am höchsten liegende Seitenkante (welche als Oberkante bezeichnet werden kann) zumindest einen gekrümmten Kantenabschnitt aufweist, welcher vorzugsweise zwischen zwei ungekrümmten Kantenabschnitten angeordnet ist, wobei vorzugsweise zwei in einer vertikalen Ebene liegende Seitenkanten, welche in vertikaler Richtung unterhalb der am höchsten liegenden Seitenkante liegen, eine gleichmäßige konkave oder konvexe Krümmung aufweisen, wobei insbesondere die in vertikaler Richtung am tiefsten liegende Seitenkante, welche gegenüber der Oberkante angeordnet ist und als Unterkante bezeichnet werden kann, gerade ausgebildet sein kann. Die in vertikaler Richtung am höchsten liegende Seitenkante kann einen im Wesentlichen s-förmigen Verlauf aufweisen. Die in vertikaler Richtung am höchsten liegende Seitenkante weist insbesondere eine nicht-konstante bzw. wechselnde Krümmung (eine Krümmung welche entlang der Seitenkante das Vorzeichen ändert) auf, wobei die restlichen Seitenkanten vorzugsweise eine konstante Krümmung aufweisen, welche konvex oder konkav sein kann. Die in vertikaler Richtung am tiefsten liegende Kante, die Unterkante, kann gerade ausgebildet sein und insbesondere, in einer Richtung parallel zur optischen Achse des ersten Optikkörpers, der Vorsatzoptik näher sein als die Oberkante. Durch den gekrümmten Kantenabschnitt kann das Licht, welches an einem 25 m ECE-Messchirm im Seg10 (die Intensität bei vertikal -4°) liegt, reduziert werden. Dadurch kann die Lichtintensität an einer, insbesondere horizontalen, unteren Grenze der Lichtverteilung homogenisiert werden.

Es kann vorgesehen sein, dass der zweite Optikkörper einen zweiten Lichteinkoppelbereich und eine vertikal unterhalb seiner optisch wirksamen Blendenkante liegende zweite optische wirksame Blendenkante aufweist, wobei Licht, welches über den zweiten Lichteinkoppelbereich in den Optikkörper eingekoppelt wird auf die zweite optisch wirksame Blendenkante trifft, wobei die zweite Blendenkante dazu eingerichtet ist, im Zusammenwirken mit der zweiten Vorsatzoptik eine weitere Lichtverteilung, insbesondere eine Signlight-Lichtverteilung, zu erzeugen.

Es kann vorgesehen sein, dass die erste Vorsatzoptik und die zweite Vorsatzoptik jeweils eine Lichtauskoppelfläche aufweisen, welche in derselben Ebene angeordnet sind, wobei die Ebene orthogonal zur optischen Achse des ersten Optikkörpers angeordnet ist.

Es kann vorgesehen sein, dass die definierte Ebene, in welcher der als Strahlenblende ausgebildete Abschnitt der Mantelfläche liegt, in einem Zustand, in welchem das Optiksystem in einem Kraftfahrzeugscheinwerfer eingebaut ist, im Wesentlichen eine Horizontalebene ist.

Es kann vorgesehen sein, dass die Lichtquellen der ersten und zweiten Vorsatzoptik in derselben, vorzugsweise planen, Fläche liegen.

Es kann vorgesehen sein, dass die Lichtquellen der ersten und zweiten Vorsatzoptik auf derselben, vorzugsweise planen, Leiterplatte angeordnet sind.

Es kann vorgesehen sein, dass ein Kraftfahrzeugscheinwerfer das erfindungsgemäße Optiksystem aufweist.

Als Fernfeld-Lichtverteilung im Sinne dieser Offenbarung wird eine Lichtverteilung verstanden, welche auf einem Messschirm sichtbar ist, wobei der Messschirm (zur Prüfung der von einem Optiksystem erzeugten Beleuchtung) in 25 m Entfernung vor dem Optiksystem (bzw. einem Kraftfahrzeugscheinwerfer, welcher das Optiksystem aufweist) senkrecht zur optischen Achse des Optiksystems aufgestellt ist. Diesbezüglich wird auf die Regelung Nr. 1 der Wirtschaftskommission der Vereinten Nationen für Europa (UN/ECE) verwiesen, welche die Bedingungen für die Genehmigung der Kraftfahrzeugscheinwerfer für asymmetrisches Abblendlicht und/oder Fernlicht regelt.

Im Rahmen dieser Beschreibung sind die Begriffe "oben", "unten", "horizontal", "vertikal" als Angaben der Ausrichtung zu verstehen, wenn das Optiksystem in normaler Benutzungsstellung angeordnet ist, nachdem es in einem Kraftfahrzeugscheinwerfer eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
- Fig. 1: eine erste Ausführungsform eines erfindungsgemäßen Optiksystems;
- Fig. 2: eine zweite Ausführungsform eines erfindungsgemäßen Optiksystems;
- Fig. 3: eine Seitenansicht eines Optikkörpers mit Vorsatzoptik;
- Fig. 4: eine perspektivische Ansicht des Optikkörpers mit Vorsatzoptik gemäß Fig. 3;
- Fig. 4a: ein Isolux Diagramm einer Lichtverteilung;
- Fig. 5: eine perspektivische Ansicht eines weiteren Optikkörpers mit Vorsatzoptik;
- Fig. 5a: ein weiteres Isolux Diagramm einer Lichtverteilung;
- Fig. 6: eine weitere Ausführungsform eines Optikkörpers; und
- Fig. 7: noch eine weitere Ausführungsform eines Optikkörpers

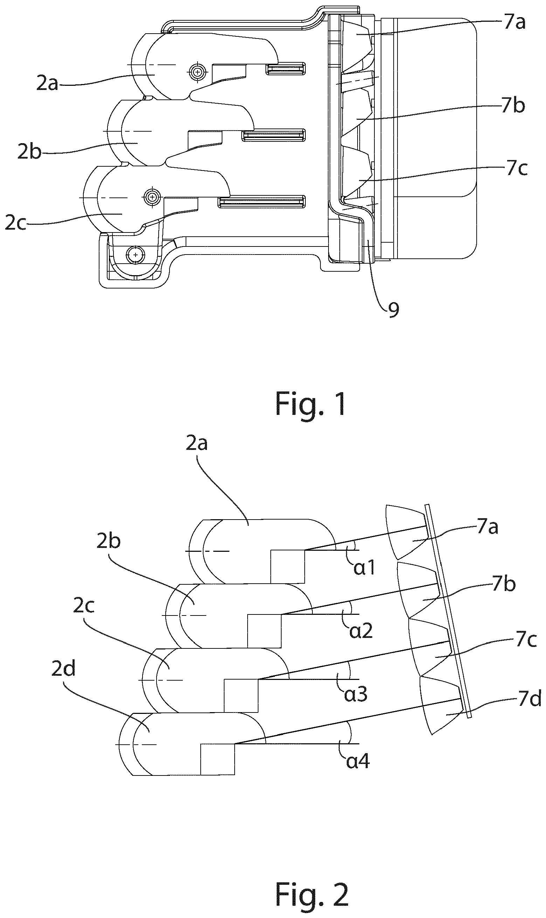

Fig. 1 zeigt eine erste Ausführungsform eines erfindungsgemäßen Optiksystems 1 für einen Kraftfahrzeugscheinwerfer, wobei das Optiksystem 1 zumindest zwei Optikkörper 2a, 2b, in dem gezeigten Ausführungsbeispiel vier Optikkörper 2a, 2b, 2c, 2d, aufweist. Die Optikkörper 2a, 2b, 2c, 2d sind vorzugsweise baugleich ausgestaltet. Generell kann jede Ausführungsform mindestens zwei, vorzugsweise drei, vier oder mehr Optikkörper 2 und den Optikkörpern 2 zugeordnete Vorsatzoptiken 7 aufweisen.

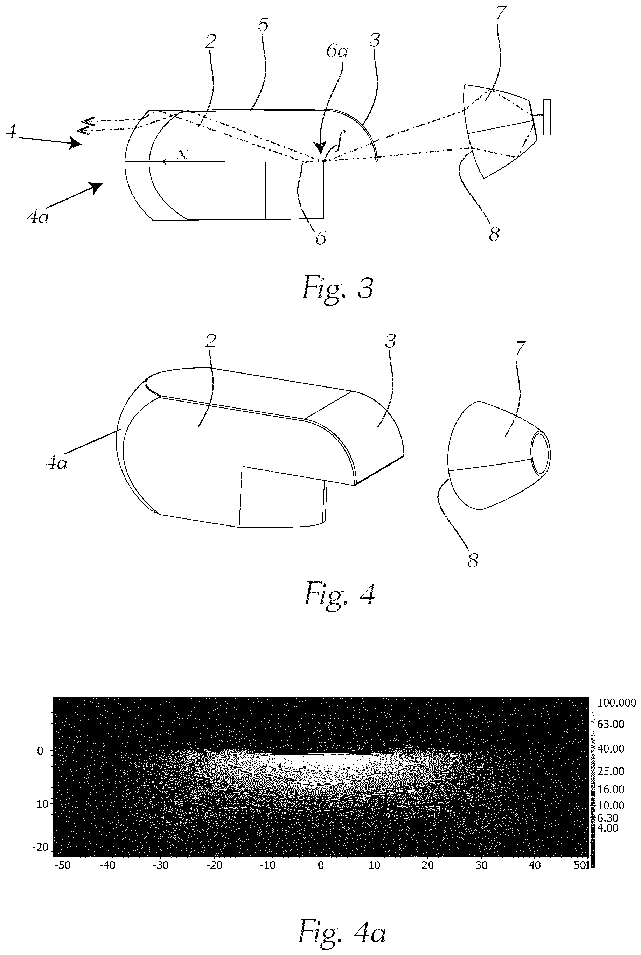

Die Fig. 3 und 4 zeigen Detailansichten des Optikkörpers 2a.

Jeder der vier gezeigten Optikkörper 2a, 2b, 2c, 2d hat einen Lichteinkoppelbereich 3, zur Einkopplung von Lichtstrahlen einer Lichtquelle in den Optikkörper 2a, 2b, 2c, 2d, und einen Lichtauskoppelbereich 4, zur Auskopplung der in den Optikkörper 2a, 2b, 2c, 2d eingekoppelten Lichtstrahlen. Der Lichtauskoppelbereich 4 ist als Projektionslinse 4a ausgebildet, welche Projektionslinse 4a eine optische Achse x und eine Brennfläche f aufweist.

Jeder Optikkörper 2a, 2b, 2c, 2d wird durch eine Mantelfläche 5 begrenzt, welche zur Umlenkung der in den Optikkörper 2a, 2b, 2c, 2d eingekoppelten Lichtstrahlen ausgebildet ist. Die Mantelfläche 5 erstreckt sich zwischen dem Lichteinkoppelbereich 3 und dem Lichtauskoppelbereich 4, wobei ein Abschnitt der Mantelfläche 5 als Strahlenblende 6 mit einer optisch wirksamen Blendenkante 6a ausgebildet ist. Der Lichteinkoppelbereich 3 jedes Optikkörpers 2a, 2b, 2c, 2d ist als eine gekrümmte Oberfläche ausgebildet.

Die optisch wirksame Blendenkante 6a ist zur Ausbildung einer Hell-Dunkel-Grenze in einer mit dem Optiksystem 1 erzeugbaren Fernfeld-Lichtverteilung ausgestaltet, wobei der als Strahlenblende ausgebildete Abschnitt der Mantelfläche 5 in einer definierten Ebene liegt. Die definierte Ebene ist in einem Zustand, in welchem das Optiksystem 1 in einem Kraftfahrzeugscheinwerfer eingebaut, im Wesentlichen eine Horizontalebene.

Die Projektionslinse 4a und die Strahlenblende 6 der Optikkörper 2a, 2b, 2c, 2d sind derart zueinander angeordnet, dass die optische Achse x der Projektionslinse 4a in der definierten Ebene liegt, und die optisch wirksame Blendenkante 6a der Strahlenblende 6 in der Brennfläche f der Projektionslinse 4a liegt bzw. der Petzvalfläche der Projektionslinse 4a folgt. Die Optikkörper 2a, 2b, 2c, 2d sind zueinander derart angeordnet, dass die Projektionslinsen 4a der Optikkörper 2a, 2b, 2c, 2d vertikal untereinander und horizontal versetzt zueinander angeordnet sind.

Das Optiksystem 1 hat zumindest zwei Vorsatzoptiken 7a, 7b, in dem gezeigten Ausführungsbeispiel vier Vorsatzoptiken 7a, 7b, 7c, 7d, wobei jedem Optikkörper 2a, 2b, 2c, 2d genau eine Vorsatzoptik 7a, 7b, 7c, 7d zugeordnet ist, wobei jede Vorsatzoptik 7a, 7b, 7c, 7d eine Lichtquelle aufweist und dazu eingerichtet ist, das Licht der Lichtquelle auf den Lichteinkoppelbereich des ihr zugeordneten Optikkörpers 2a, 2b, 2c, 2d zu lenken.

Jede Vorsatzoptik 7a, 7b, 7c, 7d ist dazu eingerichtet, Lichtstrahlen der ihr zugeordneten Lichtquelle als Lichtstrahlenbündel entlang einer bestimmen Einkoppelrichtung auf den Lichteinkoppelbereich des ihr zugeordneten Optikkörpers 2a, 2b, 2c, 2d zu lenken, wobei das Lichtstrahlenbündel nach dem Einkoppeln über den Lichteinkoppelbereich 3 derart gebündelt wird, dass das Lichtstrahlenbündel an der optisch wirksamen Blendenkante 6a, in einer Schnittebene, welche orthogonal zur optischen Achse x des Optikkörpers 2a liegt, die höchste Lichtstrahlendichte hat. Die Einkoppelrichtungen sind in jeweils in einem Einkoppel-Winkel α1-α4 zur optischen Achse des Optikkörpers 2a, 2b, 2c, 2d orientiert. Die Einkoppel-Winkel α1-α4 können unterschiedlich oder gleich sein. Die Vorsatzoptiken 7a, 7b, 7c, 7d sind unterschiedlich ausgestaltet, wobei insbesondere die Lichtauskoppelflächen 8 der Vorsatzoptiken 7a, 7b, 7c, 7d, über welche das Licht der Lichtquelle in Richtung des Optikkörpers 2a, 2b, 2c, 2d abgestrahlt wird, unterschiedlich groß ausgebildet sind.

Die vertikal oberste Vorsatzoptik 7a und der ihr zugeordnete Optikkörper 2a sind derart ausgestaltet und dazu eingerichtet, ein erstes Lichtbündel abzustrahlen, welches eine erste Fernfeld-Lichtverteilung ausbildet, wobei die erste Fernfeld-Lichtverteilung eine zumindest abschnittsweise gerade Hell-Dunkel-Grenze aufweist, welche zumindest teilweise, vorzugsweise vollständig, unterhalb der HH-Linie liegt.

Die zweite Vorsatzoptik 7b und der zweite Optikkörper 2b, welche vertikal unterhalb des obersten Optikkörpers 2a angeordnet sind, sind derart ausgestaltet und dazu eingerichtet, ein zweites Lichtbündel abzustrahlen, welches eine zweite Fernfeld-Lichtverteilung ausbildet, wobei die zweite Fernfeld-Lichtverteilung unterhalb der Hell-Dunkel-Grenze der ersten Fernfeld-Lichtverteilung liegt.

Die erste Fernfeld-Lichtverteilung hat einen ersten Gradienten und die zweite Fernfeld-Lichtverteilung hat einen zweiten Gradienten, wobei der erste Gradient kleiner ist als der zweite Gradient. Die erste Fernfeld-Lichtverteilung erfüllt insbesondere in den Punkten 50V und 50R einer Abblend-Lichtverteilung vorgegebenen Helligkeitswerte. Das erste Lichtbündel und das zweite Lichtbündel überlappen einander im Fernfeld, welches in einem Abstand von 25 m zum Optiksystem 1 liegt, zumindest teilweise. Das erste Lichtbündel und das zweite Lichtbündel sind im Nahfeld, welches in einem Abstand von bis zu 200 mm vor dem Optiksystem 1 liegt, überlappungsfrei.

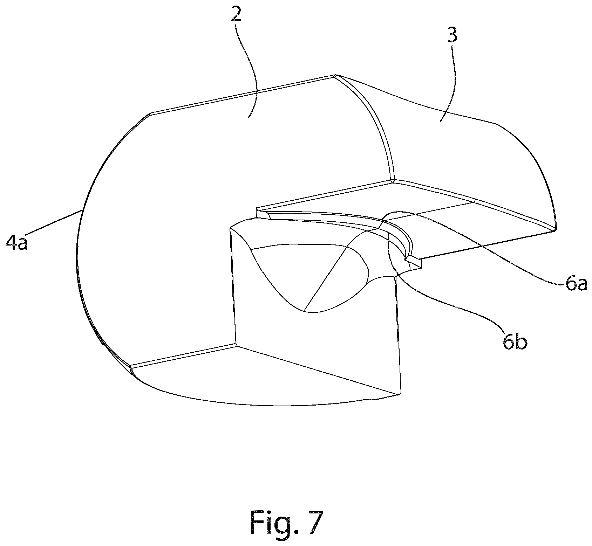

Ein dritter Optikkörper 2c, welcher unterhalb des zweiten Optikkörpers 2b angeordnet ist, weist eine dritte Vorsatzoptik 7c auf, wobei der dritte Optikkörper 2c und die dritte Vorsatzoptik 7c vorzugsweise dazu eingerichtet sind, eine zusätzliche Lichtfunktion, beispielsweise ein Signlight, zu erzeugen. Zur Erzeugung einer Signlight Lichtfunktion kann der dritte (oder jeder andere) Optikkörper 2c einen zweiten Lichteinkoppelbereich und eine vertikal unterhalb seiner optisch wirksamen Blendenkante 6a liegende zweite optische wirksame Blendenkante 6b aufweisen (s. Fig. 7). Licht, welches über den zweiten Lichteinkoppelbereich in den Optikkörper 2c eingekoppelt wird, kann auf die zweite optisch wirksame Blendenkante treffen, wobei die zweite Blendenkante dazu eingerichtet ist, im Zusammenwirken mit der zweiten Vorsatzoptik eine Signlight-Lichtfunktion, zu erzeugen.

Jede Vorsatzoptik 7a, 7b, 7c, 7d ist zu dem ihr zugeordneten Optikkörper 2a, 2b, 2c, 2d in einem bestimmten Abstand angeordnet, welcher als Distanz zwischen einem Mittelpunkt der Lichtauskoppelfläche 8 der Vorsatzoptik 7a, 7b, 7c, 7d und einem Schnittpunkt der optischen Achse x des Optikkörpers 2a, 2b, 2c, 2d mit der Blendenkante 6a des Optikkörpers 2a, 2b, 2c, 2d definiert ist. Die vier Optikkörper 2a, 2b, 2c, 2d und die den Optikkörpern zugeordneten Vorsatzoptiken 7a, 7b, 7c, 7d sind vertikal über einander angeordnet.

In der Ausführungsform gemäß Fig. 1 ist der Abstand zwischen dem obersten Optikkörper 2a und der obersten Vorsatzoptik 7a am geringsten und wird bei den vertikal darunter liegenden Optikkörpern 2b, 2c, 2d sukzessive größer. In der Ausführungsform gemäß Fig. 1 sind die vier Vorsatzoptiken 7a, 7b, 7c, 7d in einer Ebene bzw. an einer planen Leiterplatte 9 angeordnet, wobei die Ebene eine Vertikalebene ist.

In der Ausführungsform gemäß Fig. 2 sind die vier Vorsatzoptiken 7a, 7b, 7c, 7d in einer Ebene bzw. an einer planen Leiterplatte (nicht gezeigt) angeordnet, wobei die Ebene in einem Winkel < 0° zu einer Vertikalebene orientiert ist.

Fig. 4a zeigt ein Isolux Diagramm einer Lichtverteilung, welche mit einem Optikkörper 2 gemäß Fig. 4 erzeugbar ist.

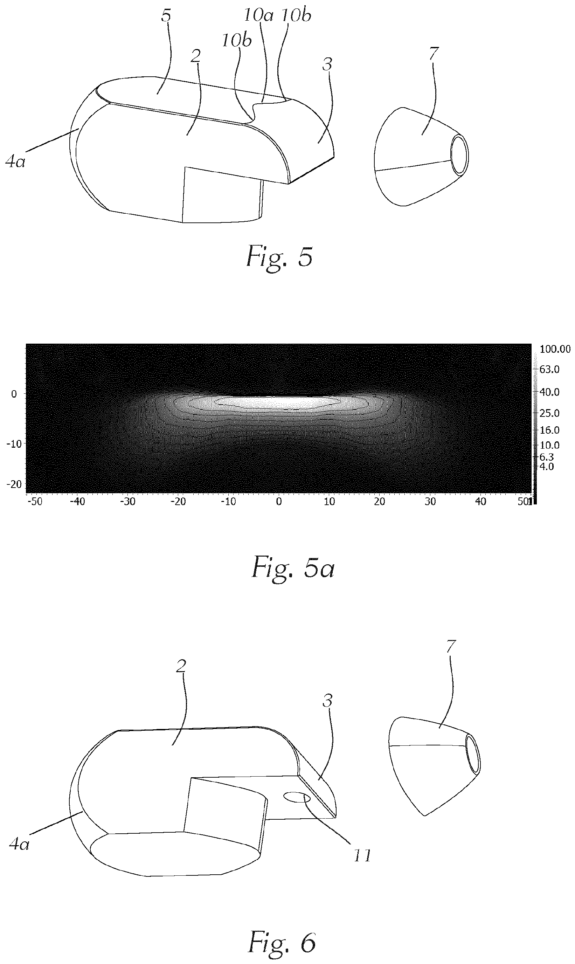

Fig. 5 zeigt eine weitere Ausführungsform eines Optikkörpers 2. Der Lichteinkoppelbereich 3 des Optikkörpers 2 ist durch vier Seitenkanten begrenzt ist, wobei die in vertikaler Richtung am höchsten liegende Seitenkante zumindest einen gekrümmten Kantenabschnitt 10a aufweist, welcher zwischen zwei ungekrümmten Kantenabschnitten 10b angeordnet ist. Durch den gekrümmten Kantenabschnitt kann in einer mit dem Optikkörper 2 und einer dem Optikkörper 2 zugeordneten Vorsatzoptik 7 erzeugbaren Lichtverteilung die Lichtintensität an einer horizontalen unteren Grenze der Lichtverteilung homogenisiert werden. Dieser Bereich ist dem Fachmann als Segment 10 bekannt. Die Seitenkanten, welche links und rechts an die oberste Seitenkante angrenzen, weisen eine im Wesentlichen gleichmäßig konvexe Krümmung auf. Die in vertikaler Richtung unterste Seitenkante kann im Wesentlichen gerade sein. Die an die oberste Seitenkante anschließenden Seitenkanten wie auch die unterste Seitenkante können jeweils konvex oder konkav ausgebildet sein.

Fig. 5a zeigt ein Isolux Diagramm einer Lichtverteilung, welche mit einem Optikkörper 2 gemäß Fig. 5 erzeugbar ist.

Bei Fig. 5a ist erkennbar, dass die horizontale Linie bei -4° (das so genannten Segment 10) geradliniger als in Fig. 4a verläuft. Dieser geradlinigere Verlauf ist durch den gekrümmten Kantenabschnitt des Lichteinkoppelbereichs 3 hervorgerufen.

Fig. 6 zeigt eine weitere Ausführungsform eines Optikkörpers 2, bei welchem der Optikkörper 2 eine halbkugelförmige Ausnehmung 11 aufweist, durch welche das eingekoppelte Licht derart umgelenkt wird, dass beim Auskoppeln auf der Projektionslinse 4a kein Licht auf das Segment 10 in der Lichtverteilung trifft. Die Ausnehmung 11 ist in ihrer Wirkung eine Alternative zu der in vertikaler Richtung am höchsten liegenden Seitenkante mit einem gekrümmten Kantenabschnitt 10a, welcher zwischen zwei ungekrümmten Kantenabschnitten 10b angeordnet ist. Mit der in Fig. 6 gezeigten Variante eines Optikkörpers kann ebenfalls eine Lichtfunktion gemäß Fig. 5 erzeugt werden.

## Patentansprüche

1. Optiksystem (1) für einen Kraftfahrzeugscheinwerfer, wobei das Optiksystem (1) zumindest zwei Optikkörper (2a, 2b) aufweist, welche jeweils umfassen:
einen Lichteinkoppelbereich (3), zur Einkopplung von Lichtstrahlen in den Optikkörper (2a, 2b),
einen Lichtauskoppelbereich (4), zur Auskopplung der in den Optikkörper (2a, 2b) eingekoppelten Lichtstrahlen, wobei der Lichtauskoppelbereich (4) als Projektionslinse (4a) ausgebildet ist, welche Projektionslinse (4a) eine optische Achse (x) und eine Brennfläche (f) aufweist,
eine den Optikkörper (2a, 2b) begrenzende Mantelfläche (5) zur Umlenkung der in den Optikkörper (2a, 2b) eingekoppelten Lichtstrahlen, welche Mantelfläche (5) sich zwischen dem Lichteinkoppelbereich (3) und dem Lichtauskoppelbereich (4) erstreckt, wobei ein Abschnitt der Mantelfläche (5) als Strahlenblende (6) mit einer optisch wirksamen Blendenkante (6a) ausgebildet ist, wobei die optisch wirksame Blendenkante (6a) zur Ausbildung einer Hell-Dunkel-Grenze in einer mit dem Optiksystem (2a, 2b) erzeugbaren Fernfeld-Lichtverteilung ausgestaltet ist, wobei der als Strahlenblende (6) ausgebildete Abschnitt der Mantelfläche (5) in einer definierten Ebene liegt,
wobei die Projektionslinse (4a) und die Strahlenblende (6) derart zueinander angeordnet sind, dass die optische Achse (x) der Projektionslinse (4a) in der definierten Ebene liegt, und die optisch wirksame Blendenkante (6a) der Strahlenblende (6) in der Brennfläche (f) der Projektionslinse (4a) liegt,
wobei das Optiksystem (2a, 2b) zumindest zwei Vorsatzoptiken (7a, 7a) aufweist, wobei jedem Optikkörper (2a, 2b) eine, vorzugsweise genau eine, Vorsatzoptik (7a, 7b) zugeordnet ist, wobei jede Vorsatzoptik (7a, 7b) eine Lichtquelle aufweist und dazu eingerichtet ist, das Licht der Lichtquelle auf den Lichteinkoppelbereich (3) des ihr zugeordneten Optikkörpers (2a, 2b) zu lenken,
wobei eine erste Vorsatzoptik (7a) der zumindest zwei Vorsatzoptiken (7a, 7b) eingerichtet ist, Lichtstrahlen der ihr zugeordneten Lichtquelle als erstes Lichtstrahlenbündel entlang einer ersten Einkoppelrichtung auf den Lichteinkoppelbereich (3) des ihr zugeordneten Optikkörpers (2a) zu lenken, wobei das erste Lichtstrahlenbündel nach dem Einkoppeln über den Lichteinkoppelbereich (3) in einen Bereich der optisch wirksamen Blendenkante (6a) des Optikkörpers (2a) derart gebündelt wird, dass das erste Lichtstrahlenbündel an der optisch wirksamen Blendenkante (6a), in einer Schnittebene, welche orthogonal zur optischen Achse des Optikkörpers (2a) liegt, die höchste Lichtstrahlendichte aufweist, wobei ein erster Teil des ersten Lichtstrahlenbündels von der Strahlenblende (6) blockiert wird und ein zweiter Teil des ersten Lichtstrahlenbündels die Blendenkante (6a) passiert und sich in Richtung der Projektionslinse (4a) fortpflanzt, wobei die erste Einkoppelrichtung in einem ersten Einkoppel-Winkel (α1) zur optischen Achse des Optikkörpers (2a) orientiert ist,
wobei eine zweite Vorsatzoptik (7b) der zumindest zwei Vorsatzoptiken (7a, 7b) eingerichtet ist, Lichtstrahlen der ihr zugeordneten Lichtquelle als zweites Lichtstrahlenbündel entlang einer zweiten Einkoppelrichtung auf den Lichteinkoppelbereich (3) des ihr zugeordneten Optikkörpers (2b) zu lenken, wobei das zweite Lichtstrahlenbündel nach dem Einkoppeln über den Lichteinkoppelbereich (3) in einen Bereich der optisch wirksamen Blendenkante (6a) des Optikkörpers (2b) derart gebündelt wird, dass das zweite Lichtstrahlenbündel an der optisch wirksamen Blendenkante (6a), in einer Schnittebene, welche orthogonal zur optischen Achse des Optikkörpers (2b) liegt, die höchste Lichtstrahlendichte aufweist, wobei ein erster Teil des zweiten Lichtstrahlenbündels von der Strahlenblende (6) blockiert wird und ein zweiter Teil des zweiten Lichtstrahlenbündels die Blendenkante (6a) passiert und sich in Richtung der Projektionslinse (4a) fortpflanzt, wobei die zweite Einkoppelrichtung in einem zweiten Einkoppel-Winkel (α2) zur optischen Achse des Optikkörpers (2b) orientiert ist,
**dadurch gekennzeichnet, dass**
die erste Vorsatzoptik (7a) und der erste Optikkörper (2a) derart ausgestaltet und dazu eingerichtet sind, ein erstes Lichtbündel abzustrahlen, welches eine erste Fernfeld-Lichtverteilung ausbildet, wobei die erste Fernfeld-Lichtverteilung eine zumindest abschnittsweise gerade Hell-Dunkel-Grenze aufweist, welche zumindest teilweise, vorzugsweise vollständig, unterhalb der HH-Linie liegt,
die zweite Vorsatzoptik (7b) und der zweite Optikkörper (2b) derart ausgestaltet und dazu eingerichtet sind, ein zweites Lichtbündel abzustrahlen, welches eine zweite Fernfeld-Lichtverteilung ausbildet, wobei die zweite Fernfeld-Lichtverteilung unterhalb der Hell-Dunkel-Grenze der ersten Fernfeld-Lichtverteilung liegt,
die erste Vorsatzoptik (7a) zu dem ersten Optikkörper (2a) in einem ersten Abstand, welcher als Distanz zwischen einem Mittelpunkt der Lichtauskoppelfläche (8) der ersten Vorsatzoptik (7a) und einem Schnittpunkt der optischen Achse (x) des ersten Optikkörpers (2a) mit der Blendenkante (6a) des ersten Optikkörpers (2a) definiert ist, zueinander angeordnet sind und die zweite Vorsatzoptik (7b) zu dem zweiten Optikkörper (2b) in einem zweiten Abstand, welcher als Distanz zwischen einem Mittelpunkt der Lichtauskoppelfläche (8) der zweiten Vorsatzoptik (7b) und einem Schnittpunkt der optischen Achse (x) des zweiten Optikkörpers (2b) mit der Blendenkante (6a) des zweiten Optikkörpers (2b) definiert ist, zueinander angeordnet sind, wobei der erste Abstand kleiner ist als der zweite Abstand.

2. Optiksystem (1) nach Anspruch 1, wobei die erste Fernfeld-Lichtverteilung einen ersten Gradienten und die zweite Fernfeld-Lichtverteilung einen zweiten Gradienten aufweist, wobei der erste Gradient entlang eines vertikalen Schnitts durch die Helldunkelgrenze der ersten Fernfeld-Lichtverteilung und der zweite Gradient entlang eines vertikalen Schnitts durch die Helldunkelgrenze der zweiten Fernfeld-Lichtverteilung bestimmt wird, wobei der erste Gradient kleiner ist als der zweite Gradient, wobei vorzugsweise die erste Fernfeld-Lichtverteilung Helligkeitswerte, welche in den Punkten 50V und 50R in einer Abblend-Lichtverteilung vorgegeben werden, erfüllt.

3. Optiksystem (1) nach einem der vorhergehenden Ansprüche, wobei das erste Lichtbündel, welches die erste Fernfeld-Lichtverteilung ausbildet, mit dem zweiten Lichtbündel, welches die zweite Fernfeld-Lichtverteilung ausbildet, im Fernfeld, welches in einem Abstand von 25 m zum Optiksystem (1) liegt, zumindest teilweise überlappt, wobei vorzugsweise das erste Lichtbündel und das zweite Lichtbündel im Nahfeld, welches in einem Abstand von bis zu 200 mm vor dem Optiksystem (1) liegt, überlappungsfrei sind.

4. Optiksystem (1) nach einem der vorhergehenden Ansprüche, wobei der erste Optikkörper (2a) und der zweite Optikkörper (2b) baugleich sind, wobei vorzugsweise der erste Einkoppel-Winkel (α1) und der zweite Einkoppel-Winkel (α2) unterschiedlich sind, wobei insbesondere wobei die optischen Achsen des ersten (2a) und zweiten Optikkörpers (2b) parallel zueinander orientiert sind.

5. Optiksystem (1) nach einem der vorhergehenden Ansprüche, wobei die erste Vorsatzoptik (7a) und die zweite Vorsatzoptik (7b) unterschiedlich ausgestaltet sind, wobei insbesondere Lichtauskoppelflächen (8) der ersten (7a) und zweiten Vorsatzoptik (7b), über welche das Licht der Lichtquelle in Richtung des jeweiligen Optikkörpers (2a, 2b) abgestrahlt wird, unterschiedlich groß ausgebildet sind.

6. Optiksystem (1) nach einem der vorhergehenden Ansprüche, wobei der erste Optikkörper (2a) und die erste Vorsatzoptik (7a) vertikal über dem zweiten Optikkörper (2b) und der zweiten Vorsatzoptik (7b) angeordnet ist, wobei vorzugsweise der erste Optikkörper (2a) relativ zu dem zweiten Optikkörper (2b) derart angeordnet ist, dass die Projektionslinse (4a) des ersten Optikkörpers (2a) zu der Projektionslinse (4a) des zweiten Optikkörpers (2b) entlang einer Richtung, welche parallel zur optischen Achse (x) des ersten Optikkörpers (2a) orientiert ist, versetzt zueinander angeordnet ist, wobei vorzugsweise der Lichteinkoppelbereich (3) des ersten Optikkörpers (2a) und/oder des zweiten Optikkörpers (2b) eine gekrümmte Oberfläche aufweist, wobei vorzugsweise der Lichteinkoppelbereich (3) des ersten Optikkörpers (2a) und/oder des zweiten Optikkörpers (2b) kugelsegmentförmig ausgebildet ist.

7. Optiksystem (1) nach einem der vorhergehenden Ansprüche, wobei das mit dem ersten Optikkörper (2a) erzeugbare, die erste Fernfeld-Lichtverteilung ausbildende, erste Lichtbündel einen ersten horizontalen Abstrahl-Winkel und das mit dem zweiten Optikkörper (2b) erzeugbare, die zweite Fernfeld-Lichtverteilung ausbildende, zweite Lichtbündel einen zweiten horizontalen Abstrahl-Winkel aufweist, wobei der erste horizontale Abstrahl-Winkel kleiner ist als der zweite horizontale Abstrahl-Winkel.

8. Optiksystem (1) nach einem der vorhergehenden Ansprüche, wobei die mit dem ersten (2a) bzw. zweiten Optikkörper (2b) erzeugbare erste bzw. zweite Fernfeld-Lichtverteilung jeweils ein Helligkeitsmaximum aufweist, wobei die optische Achse (x) des zweiten Optikkörpers (2b) zu der optischen Achse (x) des ersten Optikkörpers (2a) unter einem Neigungswinkel, welcher größer als 0° ist, geneigt ist, wobei der Neigungswinkel derart ist, dass das Helligkeitsmaximum der zweiten Fernfeld-Lichtverteilung innerhalb des Helligkeitsmaximums der ersten Fernfeld-Lichtverteilung liegt, wobei vorzugsweise der Neigungswinkel 0,1° bis 0,5°, insbesondere 0,3°, beträgt.

9. Optiksystem (1) nach einem der vorhergehenden Ansprüche, wobei zwischen dem ersten (2a) und dem zweiten Optikkörper (2b) ein Abschattungselement angeordnet ist, welches dazu eingerichtet ist, Streulicht, welches von der ersten Vorsatzoptik (7a) in Richtung des zweiten Optikkörpers (2b) abgestrahlt wird, zu blockieren.

10. Optiksystem (1) nach einem der vorhergehenden Ansprüche, wobei der Lichteinkoppelbereich (3) des ersten Optikkörpers (2a) durch, vorzugsweise vier, Seitenkanten begrenzt ist, wobei die in vertikaler Richtung am höchsten liegende Seitenkante zumindest einen gekrümmten Kantenabschnitt aufweist, welcher vorzugsweise zwischen zwei ungekrümmten Kantenabschnitten angeordnet ist, wobei vorzugsweise in einer vertikalen Ebene liegende Seitenkanten, welche in vertikaler Richtung unterhalb der am höchsten liegenden Seitenkante liegen, eine gleichmäßige konkave oder konvexe Krümmung aufweisen, wobei die in vertikaler Richtung am tiefsten liegende Seitenkante gerade ist.

11. Optiksystem (1) nach einem der vorhergehenden Ansprüche, wobei der zweite Optikkörper (2b) einen zweiten Lichteinkoppelbereich und eine vertikal unterhalb seiner optisch wirksamen Blendenkante (6) liegende zweite optische wirksame Blendenkante aufweist, wobei Licht, welches über den zweiten Lichteinkoppelbereich in den Optikkörper (2b) eingekoppelt wird auf die zweite optisch wirksame Blendenkante trifft, wobei die zweite Blendenkante dazu eingerichtet ist, im Zusammenwirken mit der zweiten Vorsatzoptik eine weitere Lichtverteilung, insbesondere eine Signlight-Lichtverteilung, zu erzeugen.

12. Optiksystem (1) nach einem der vorhergehenden Ansprüche, wobei die erste Vorsatzoptik (7a) und die zweite Vorsatzoptik (7b) jeweils eine Lichtauskoppelfläche (8) aufweisen, welche in derselben Ebene angeordnet sind, wobei die Ebene orthogonal zur optischen Achse (x) des ersten Optikkörpers (2a) angeordnet ist.

13. Optiksystem (1) nach einem der vorhergehenden Ansprüche, wobei die definierte Ebene, in welcher der als Strahlenblende (6) ausgebildete Abschnitt der Mantelfläche (5) liegt, in einem Zustand, in welchem das Optiksystem (1) in einem Kraftfahrzeugscheinwerfer eingebaut ist, im Wesentlichen eine Horizontalebene ist, wobei vorzugsweise die Lichtquellen der ersten (7a) und zweiten Vorsatzoptik (7b) in derselben, insbesondere planen, Fläche liegen, wobei vorzugsweise die Lichtquellen der ersten (7a) und zweiten Vorsatzoptik (7b) auf derselben, insbesondere planen, Leiterplatte angeordnet sind.

14. Kraftfahrzeugscheinwerfer mit einem Optiksystem nach einem der Ansprüche 1-13.

## Claims

1. Optical system (1) for a motor vehicle headlamp, the optical system (1) having at least two optical bodies (2a, 2b) which each comprise
a light coupling area (3) for coupling light beams into the optical body (2a, 2b),
a light decoupling area (4) for decoupling the light beams coupled into the optical body (2a, 2b), wherein the light decoupling area (4) is designed as a projection lens (4a), which projection lens (4a) has an optical axis (x) and a focal surface (f),
a lateral surface (5) bounding the optical body (2a, 2b) for deflecting the light beams coupled into the optical body (2a, 2b), which lateral surface (5) extends between the light coupling-in region (3) and the light coupling-out region (4), a section of the lateral surface (5) being designed as a beam diaphragm (6) with an optically effective diaphragm edge (6a), wherein the optically effective diaphragm edge (6a) is designed to form a cut-off line in a far-field light distribution which can be generated with the optical system (2a, 2b), wherein the section of the lateral surface (5) designed as a beam diaphragm (6) lies in a defined plane,
wherein the projection lens (4a) and the beam diaphragm (6) are arranged relative to one another in such a way that the optical axis (x) of the projection lens (4a) lies in the defined plane, and the optically effective diaphragm edge (6a) of the beam diaphragm (6) lies in the focal surface (f) of the projection lens (4a),
wherein the optical system (2a, 2b) has at least two optical attachments (7a, 7a), wherein each optical body (2a, 2b) is assigned one, preferably exactly one, optical attachment (7a, 7b), wherein each optical attachment (7a, 7b) has a light source and is set up to direct the light from the light source onto the light coupling area (3) of the optical body (2a, 2b) assigned to it,
wherein a first optical attachment (7a) of the at least two optical attachments (7a, 7b) is set up to direct light rays from the light source assigned to it as a first light ray bundle along a first coupling direction onto the light coupling region (3) of the optical body (2a) assigned to it, wherein the first light beam is bundled after coupling via the light coupling region (3) into a region of the optically effective aperture edge (6a) of the optical body (2a) in such a way that the first light beam is bundled at the optically effective aperture edge (6a), in a sectional plane which is orthogonal to the optical axis of the optical body (2a), has the highest light beam density, wherein a first part of the first light beam is blocked by the beam diaphragm (6) and a second part of the first light beam passes the diaphragm edge (6a) and propagates in the direction of the projection lens (4a), wherein the first coupling direction is oriented at a first coupling angle (α1) to the optical axis of the optical body (2a),
wherein a second optical attachment (7b) of the at least two optical attachments (7a, 7b) is set up to direct light rays from the light source assigned to it as a second light beam along a second coupling direction onto the light coupling region (3) of the optical body (2b) assigned to it, wherein the second light beam is bundled after coupling via the light coupling region (3) into a region of the optically effective aperture edge (6a) of the optical body (2b) in such a way that the second light beam is bundled at the optically effective aperture edge (6a), in a sectional plane which is orthogonal to the optical axis of the optical body (2b), has the highest light beam density, a first part of the second light beam being blocked by the beam diaphragm (6) and a second part of the second light beam passing the diaphragm edge (6a) and propagating in the direction of the projection lens (4a), wherein the second coupling direction is oriented at a second coupling angle (α2) to the optical axis of the optical body (2b), **characterized in that**
the first optical attachment (7a) and the first optical body (2a) are designed and set up to emit a first light beam which forms a first far-field light distribution, the first far-field light distribution having an at least partially straight cut-off line which lies at least partially, preferably completely, below the HH line,
the second optical attachment (7b) and the second optical body (2b) are designed and set up to emit a second light beam which forms a second far-field light distribution, the second far-field light distribution lying below the cut-off line of the first far-field light distribution,
the first attachment optics (7a) are arranged relative to the first optical body (2a) at a first distance, which is defined as the distance between a center of the light decoupling surface (8) of the first attachment optics (7a) and a point of intersection of the optical axis (x) of the first optical body (2a) with the aperture edge (6a) of the first optical body (2a), and the second attachment optics (7b) are arranged relative to the second optical body (2b) at a second distance, which is defined as the distance between a center of the light decoupling surface (8) of the second attachment optics (7b) and a point of intersection of the optical axis (x) of the second optical body (2b) with the aperture edge (6a) of the first optical body (2a), which is defined as the distance between a center point of the light decoupling surface (8) of the second optical attachment (7b) and a point of intersection of the optical axis (x) of the second optical body (2b) with the aperture edge (6a) of the second optical body (2b), wherein the first distance is smaller than the second distance.

2. Optical system (1) according to claim 1, wherein the first far-field light distribution has a first gradient and the second far-field light distribution has a second gradient, wherein the first gradient is determined along a vertical section by the cut-off line of the first far-field light distribution and the second gradient is determined along a vertical section by the cut-off line of the second far-field light distribution, the first gradient being smaller than the second gradient, the first far-field light distribution preferably fulfilling brightness values which are specified at points 50V and 50R in a dimming light distribution.

3. Optical system (1) according to one of the preceding claims, wherein the first light beam, which forms the first far-field light distribution, at least partially overlaps with the second light beam, which forms the second far-field light distribution, in the far field, which lies at a distance of 25 m from the optical system (1), wherein preferably the first light beam and the second light beam are non-overlapping in the near field, which lies at a distance of up to 200 mm in front of the optical system (1).

4. Optical system (1) according to one of the preceding claims, wherein the first optical body (2a) and the second optical body (2b) are of identical construction, wherein preferably the first coupling angle (α1) and the second coupling angle (α2) are different, wherein in particular wherein the optical axes of the first (2a) and second optical body (2b) are oriented parallel to each other.

5. Optical system (1) according to one of the preceding claims, wherein the first attachment optics (7a) and the second attachment optics (7b) are designed differently, wherein in particular light decoupling surfaces (8) of the first (7a) and second attachment optics (7b), via which the light of the light source is emitted in the direction of the respective optical body (2a, 2b), are of different sizes.

6. Optical system (1) according to one of the preceding claims, wherein the first optical body (2a) and the first attachment optics (7a) are arranged vertically above the second optical body (2b) and the second attachment optics (7b), wherein preferably the first optical body (2a) is arranged relative to the second optical body (2b) in such a way that the projection lens (4a) of the first optical body (2a) is offset relative to the projection lens (4a) of the second optical body (2b) along a direction which is oriented parallel to the optical axis (x) of the first optical body (2a), wherein preferably the light coupling region (3) of the first optical body (2a) is offset relative to each other, which is oriented parallel to the optical axis (x) of the first optical body (2a), is arranged offset relative to one another, the light coupling region (3) of the first optical body (2a) and/or of the second optical body (2b) preferably having a curved surface, the light coupling region (3) of the first optical body (2a) and/or of the second optical body (2b) preferably being in the form of a spherical segment.

7. Optical system (1) according to one of the preceding claims, wherein the first light beam which can be generated with the first optical body (2a) and forms the first far-field light distribution has a first horizontal beam angle and the second light beam which can be generated with the second optical body (2b) and forms the second far-field light distribution has a second horizontal beam angle, wherein the first horizontal beam angle is smaller than the second horizontal beam angle.

8. Optical system (1) according to one of the preceding claims, wherein the first and second far-field light distributions which can be generated with the first (2a) and second optical body (2b), respectively, each have a brightness maximum, wherein the optical axis (x) of the second optical body (2b) second far-field light distribution each has a brightness maximum, wherein the optical axis (x) of the second optical body (2b) is inclined to the optical axis (x) of the first optical body (2a) at an angle of inclination which is greater than 0°, wherein the angle of inclination is such that the brightness maximum of the second far-field light distribution lies within the brightness maximum of the first far-field light distribution, wherein preferably the angle of inclination is 0.1° to 0.5°, in particular 0.3°.

9. Optical system (1) according to one of the preceding claims, wherein a shading element is arranged between the first (2a) and the second optical body (2b), which element is set up to block scattered light which is emitted from the first optical attachment (7a) in the direction of the second optical body (2b).

10. Optical system (1) according to one of the preceding claims, wherein the light coupling region (3) of the first optical body (2a) is delimited by, preferably four, side edges, wherein the side edge lying highest in the vertical direction has at least one curved edge portion, which is preferably arranged between two uncurved edge portions, wherein side edges lying preferably in a vertical plane, which lie in the vertical direction below the highest lying side edge, have a uniform concave or convex curvature, wherein the side edge lying lowest in the vertical direction is straight.

11. Optical system (1) according to one of the preceding claims, wherein the second optical body (2b) has a second light-coupling region and a second optically effective aperture edge (6) lying vertically below its optically effective aperture edge, wherein light which passes via the second light-coupling region is guided through the second optically effective aperture edge (6), which is coupled into the optical body (2b) via the second light coupling region impinges on the second optically effective aperture edge, the second aperture edge being set up to generate a further light distribution, in particular a signlight light distribution, in cooperation with the second optical attachment.

12. Optical system (1) according to one of the preceding claims, wherein the first attachment optics (7a) and the second attachment optics (7b) each have a light decoupling surface (8) which are arranged in the same plane, wherein the plane is arranged orthogonally to the optical axis (x) of the first optical body (2a).

13. Optical system (1) according to one of the preceding claims, wherein the defined plane, in which the section of the lateral surface (5) formed as a beam diaphragm (6) lies, is essentially a horizontal plane in a state in which the optical system (1) is installed in a motor vehicle headlamp, wherein preferably the light sources of the first (7a) and second attachment optics (7b) lie in the same, in particular flat, surface, wherein preferably the light sources of the first (7a) and second attachment optics (7b) are arranged on the same, in particular flat, printed circuit board.

14. Motor vehicle headlamp with an optical system according to one of claims 1-13.

## Revendications

1. Système optique (1) pour un phare de véhicule automobile, le système optique (1) présentant au moins deux corps optiques (2a, 2b) qui comprennent chacun :
une zone d'injection de lumière (3), pour injecter des rayons lumineux dans le corps optique (2a, 2b),
une zone de découplage de la lumière (4), pour le découplage des rayons lumineux couplés dans le corps optique (2a, 2b), la zone de découplage de la lumière (4) étant conçue comme une lentille de projection (4a), laquelle lentille de projection (4a) présente un axe optique (x) et une surface focale (f),
une surface d'enveloppe (5) délimitant le corps optique (2a, 2b) pour dévier les rayons lumineux couplés dans le corps optique (2a, 2b), laquelle surface d'enveloppe (5) s'étend entre la zone de couplage de lumière (3) et la zone de découplage de lumière (4), une section de la surface d'enveloppe (5) étant conçue comme un diaphragme de rayons (6) avec une arête de diaphragme (6a) optiquement efficace, l'arête de diaphragme (6a) optiquement efficace étant conçue pour former une limite clair-obscur dans une répartition de la lumière en champ lointain pouvant être générée par le système optique (2a, 2b), la section de la surface d'enveloppe (5) conçue comme diaphragme de faisceau (6) se trouvant dans un plan défini,
la lentille de projection (4a) et le diaphragme de rayonnement (6) étant disposés l'un par rapport à l'autre de telle sorte que l'axe optique (x) de la lentille de projection (4a) se trouve dans le plan défini, et que l'arête de diaphragme (6a) optiquement efficace du diaphragme de rayonnement (6) se trouve dans la surface focale (f) de la lentille de projection (4a),
le système optique (2a, 2b) présentant au moins deux optiques rapportées (7a, 7a), une optique rapportée (7a, 7b), de préférence exactement une, étant associée à chaque corps optique (2a, 2b), chaque optique rapportée (7a, 7b) présentant une source lumineuse et étant conçue pour diriger la lumière de la source lumineuse sur la zone de couplage de lumière (3) du corps optique (2a, 2b) qui lui est associé,
une première optique additionnelle (7a) des au moins deux optiques additionnelles (7a, 7b) étant conçue pour diriger des rayons lumineux de la source lumineuse qui lui est associée sous la forme d'un premier faisceau de rayons lumineux le long d'une première direction d'injection sur la zone d'injection de lumière (3) du corps optique (2a) qui lui est associé, le premier faisceau de rayons lumineux étant focalisé après le couplage par la zone de couplage de lumière (3) dans une zone de l'arête de diaphragme optiquement active (6a) du corps optique (2a) de telle sorte que le premier faisceau de rayons lumineux est focalisé sur l'arête de diaphragme optiquement active (6a), dans un plan de coupe qui est orthogonal à l'axe optique du corps optique (2a), présente la densité de rayons lumineux la plus élevée, une première partie du premier faisceau de rayons lumineux étant bloquée par le diaphragme de rayons (6) et une deuxième partie du premier faisceau de rayons lumineux passant le bord du diaphragme (6a) et se propageant en direction de la lentille de projection (4a), la première direction de couplage étant orientée selon un premier angle de couplage (α1) par rapport à l'axe optique du corps optique (2a),
une deuxième optique additionnelle (7b) des au moins deux optiques additionnelles (7a, 7b) étant conçue pour diriger des rayons lumineux de la source lumineuse qui lui est associée sous la forme d'un deuxième faisceau de rayons lumineux le long d'une deuxième direction d'injection sur la zone d'injection de lumière (3) du corps optique (2b) qui lui est associé, le deuxième faisceau de rayons lumineux étant, après le couplage, focalisé par la zone de couplage de lumière (3) dans une zone de l'arête de diaphragme optiquement active (6a) du corps optique (2b) de telle sorte que le deuxième faisceau de rayons lumineux est focalisé sur l'arête de diaphragme optiquement active (6a), dans un plan de coupe qui est orthogonal à l'axe optique du corps optique (2b), présente la densité de rayons lumineux la plus élevée, une première partie du deuxième faisceau de rayons lumineux étant bloquée par le diaphragme de rayons (6) et une deuxième partie du deuxième faisceau de rayons lumineux passant le bord du diaphragme (6a) et se propageant en direction de la lentille de projection (4a), la deuxième direction de couplage étant orientée selon un deuxième angle de couplage (α2) par rapport à l'axe optique du corps optique (2b), **caractérisé en ce que**
le premier adaptateur optique (7a) et le premier corps optique (2a) sont conçus et agencés de manière à émettre un premier faisceau lumineux qui forme une première répartition de lumière en champ lointain, la première répartition de lumière en champ lointain présentant une limite clair-obscur droite au moins par sections, qui se situe au moins partiellement, de préférence complètement, en dessous de la ligne HH,
le deuxième adaptateur optique (7b) et le deuxième corps optique (2b) sont conçus et agencés de manière à émettre un deuxième faisceau lumineux qui forme une deuxième répartition de lumière de champ lointain, la deuxième répartition de lumière de champ lointain étant située en dessous de la limite clair-obscur de la première répartition de lumière de champ lointain,
la première optique additionnelle (7a) est disposée par rapport au premier corps optique (2a) à une première distance qui est définie comme la distance entre un centre de la surface de découplage de lumière (8) de la première optique additionnelle (7a) et un point d'intersection de l'axe optique (x) du premier corps optique (2a) avec le bord de diaphragme (6a) du premier corps optique (2a), et la deuxième optique additionnelle (7b) est disposée par rapport au deuxième corps optique (2b) à une deuxième distance, qui est définie comme la distance entre un centre de la surface de découplage de la lumière (8) de la deuxième optique additionnelle (7b) et un point d'intersection de l'axe optique (x) du deuxième corps optique (2b) avec le bord d'ouverture (6a) du deuxième corps optique (2b), la première distance étant inférieure à la deuxième distance.

2. Système optique (1) selon la revendication 1, dans lequel la première distribution de lumière de champ lointain présente un premier gradient et la deuxième distribution de lumière de champ lointain présente un deuxième gradient, le premier gradient étant déterminé le long d'une coupe verticale par la limite de clair-obscur de la première distribution de lumière de champ lointain et le deuxième gradient étant déterminé le long d'une coupe verticale par la limite de clair-obscur de la deuxième distribution de lumière de champ lointain, le premier gradient étant inférieur au deuxième gradient, la première répartition de la lumière en champ lointain satisfaisant de préférence à des valeurs de luminosité qui sont prédéfinies aux points 50V et 50R dans une répartition de la lumière de croisement.

3. Système optique (1) selon l'une des revendications précédentes, dans lequel le premier faisceau lumineux, qui forme la première distribution de lumière en champ lointain, se chevauche au moins partiellement avec le deuxième faisceau lumineux, qui forme la deuxième distribution de lumière en champ lointain, dans le champ lointain qui se trouve à une distance de 25 m du système optique (1), le premier faisceau lumineux et le deuxième faisceau lumineux étant de préférence exempts de chevauchement dans le champ proche qui se trouve à une distance allant jusqu'à 200 mm devant le système optique (1).

4. Système optique (1) selon l'une des revendications précédentes, dans lequel le premier corps optique (2a) et le deuxième corps optique (2b) sont de construction identique, dans lequel de préférence le premier angle de couplage (α1) et le deuxième angle de couplage (α2) sont différents, dans lequel en particulier dans lequel les axes optiques du premier (2a) et du deuxième corps optique (2b) sont orientés parallèlement entre eux.

5. Système optique (1) selon l'une des revendications précédentes, dans lequel la première optique rapportée (7a) et la deuxième optique rapportée (7b) sont configurées différemment, des surfaces de découplage de lumière (8) de la première (7a) et de la deuxième optique rapportée (7b), par lesquelles la lumière de la source lumineuse est émise en direction du corps optique (2a, 2b) respectif, étant notamment configurées avec des dimensions différentes.

6. Système optique (1) selon l'une des revendications précédentes, dans lequel le premier corps optique (2a) et la première optique rapportée (7a) sont disposés verticalement au-dessus du deuxième corps optique (2b) et de la deuxième optique rapportée (7b), de préférence le premier corps optique (2a) est disposé par rapport au deuxième corps optique (2b) de telle sorte que la lentille de projection (4a) du premier corps optique (2a) est décalée par rapport à la lentille de projection (4a) du deuxième corps optique (2b) selon une direction, qui est orientée parallèlement à l'axe optique (x) du premier corps optique (2a), est décalée l'une par rapport à l'autre, la zone de couplage de lumière (3) du premier corps optique (2a) et/ou du deuxième corps optique (2b) présentant de préférence une surface incurvée, la zone de couplage de lumière (3) du premier corps optique (2a) et/ou du deuxième corps optique (2b) étant de préférence réalisée en forme de segment de sphère.

7. Système optique (1) selon l'une des revendications précédentes, dans lequel le premier faisceau lumineux pouvant être généré par le premier corps optique (2a) et formant la première répartition de la lumière en champ lointain présente un premier angle de rayonnement horizontal et le deuxième faisceau lumineux pouvant être généré par le deuxième corps optique (2b) et formant la deuxième répartition de la lumière en champ lointain présente un deuxième angle de rayonnement horizontal, le premier angle de rayonnement horizontal étant inférieur au deuxième angle de rayonnement horizontal.

8. Système optique (1) selon l'une des revendications précédentes, dans lequel la première ou la deuxième courbe de luminosité pouvant être générée avec le premier (2a) ou le deuxième corps optique (2b) présente un maximum de luminosité. L'axe optique (x) du deuxième corps optique (2b) est incliné par rapport à l'axe optique (x) du premier corps optique (2a) selon un angle d'inclinaison supérieur à 0°, l'angle d'inclinaison étant tel que le maximum de luminosité de la deuxième distribution de lumière en champ lointain se situe à l'intérieur du maximum de luminosité de la première distribution de lumière en champ lointain, l'angle d'inclinaison étant de préférence de 0,1° à 0,5°, en particulier de 0,3°.

9. Système optique (1) selon l'une quelconque des revendications précédentes, dans lequel un élément d'occultation est disposé entre le premier (2a) et le deuxième corps optique (2b), lequel élément d'occultation est adapté pour bloquer la lumière parasite émise par le premier élément optique rapporté (7a) en direction du deuxième corps optique (2b).

10. Système optique (1) selon l'une des revendications précédentes, dans lequel la zone de couplage de lumière (3) du premiery corps optique (2a) est délimitée par, de préférence, quatre bords latéraux, le bord latéral le plus élevé dans la direction verticale présentant au moins une section de bord incurvée, qui est de préférence disposée entre deux sections d'arête non courbées, les arêtes latérales situées de préférence dans un plan vertical, qui se trouvent en dessous de l'arête latérale la plus haute dans la direction verticale, présentant une courbure concave ou convexe uniforme, l'arête latérale la plus basse dans la direction verticale étant droite.

11. Système optique (1) selon l'une des revendications précédentes, dans lequel le deuxième corps optique (2b) présente une deuxième zone de couplage de la lumière et un deuxième bord de diaphragme optiquement efficace situé verticalement en dessous de son bord de diaphragme optiquement efficace (6), la lumière, qui est couplée dans le corps optique (2b) par l'intermédiaire de la deuxième zone de couplage de lumière, rencontre le deuxième bord de diaphragme optiquement actif, le deuxième bord de diaphragme étant conçu pour produire, en coopération avec le deuxième adaptateur optique, une autre répartition de la lumière, en particulier une répartition de la lumière de signalisation.

12. Système optique (1) selon l'une quelconque des revendications précédentes, dans lequel la première optique rapportée (7a) et la deuxième optique rapportée (7b) comportent chacune une surface de découplage de lumière (8) qui sont disposées dans un même plan, ledit plan étant orthogonal à l'axe optique (x) du premier corps optique (2a).

13. Système optique (1) selon l'une des revendications précédentes, dans lequel le plan défini dans lequel se trouve la portion de la surface d'enveloppe (5) réalisée sous forme de diaphragme (6) est sensiblement un plan horizontal dans un état dans lequel le système optique (1) est monté dans un projecteur de véhicule automobile, les sources lumineuses de la première (7a) et de la deuxième optique rapportée (7b) étant de préférence situées dans la même surface, notamment plane, les sources lumineuses de la première (7a) et de la deuxième optique rapportée (7b) étant de préférence disposées sur le même circuit imprimé, notamment plan.

14. Projecteur de véhicule automobile comportant un système optique selon l'une quelconque des revendications 1 à 13.
